Europäisches Patentamt

European Patent Office

Office européen des brevets

(19)

(11) Publication number: **0 020 783**

**B1**

(12) **EUROPEAN PATENT SPECIFICATION**

(45) Date of publication of patent specification: **09.11.83**

(51) Int. Cl.³: **H 04 L 27/22**

(21) Application number: **80900053.2**

(22) Date of filing: **05.12.79**

(86) International application number:
**PCT/JP79/00310**

(87) International publication number:
**WO 80/01229 12.06.80 Gazette 80/13**

(54) PHASE CORRECTION CIRCUIT FOR A PHASE MODULATION SYSTEM.

(30) Priority: **08.12.78 JP 152342/78**

(43) Date of publication of application:
**07.01.81 Bulletin 81/1**

(45) Publication of the grant of the patent:
**09.11.83 Bulletin 83/45**

(84) Designated Contracting States:
**DE FR GB**

(56) References cited:
**DE - A - 2 522 519**
**JP - A - 50 115 951**

**ELECTRO-TECHNOLOGY, vol. 83, no. 5, May 1969, London "Demodulator overcomes data detection errors", page 24**

**IEEE INTERNATIONAL CONFERENCE ON COMMUNICATIONS, June 16-18, 1975, New York, USA ASAHARA et al. A 4 phase PSK modem for an SCPC satellite communication system", pages 12-28 to 12-32 (vol. 1)**

(73) Proprietor: **FUJITSU LIMITED**
**1015, Kamikodanaka Nakahara-ku**
**Kawasaki-shi Kanagawa 211 (JP)**

(72) Inventor: **KURIHARA, Hiroshi**
**2-15, Umesato 2-chome**
**Suginami-ku Tokyo 166 (JP)**

(74) Representative: **Muir, Ian R. et al,**
**HASELTINE LAKE & CO. Hazlitt House 28**
**Southampton Buildings Chancery Lane**
**London WC2A 1AT (GB)**

Courier Press, Leamington Spa, England.

Phase correction circuit for a phase modulation system

This invention relates to a circuit arrangement for a phase modulation system and in particular to an arrangement which can reduce the occurrence rate of phase skip of the carrier, without introducing an unacceptably adverse effect on the transient response characteristic of a circuit which regenerates the carrier from the PSK-modulated signal.

Filter arrangements are known for correcting errors in signals in PSK systems e.g. as described in DE—A—2,522,519 and Electro-Technology, vol. 83, no. 5, May 1969, London "Demodulator overcomes data detection errors", p. 24.

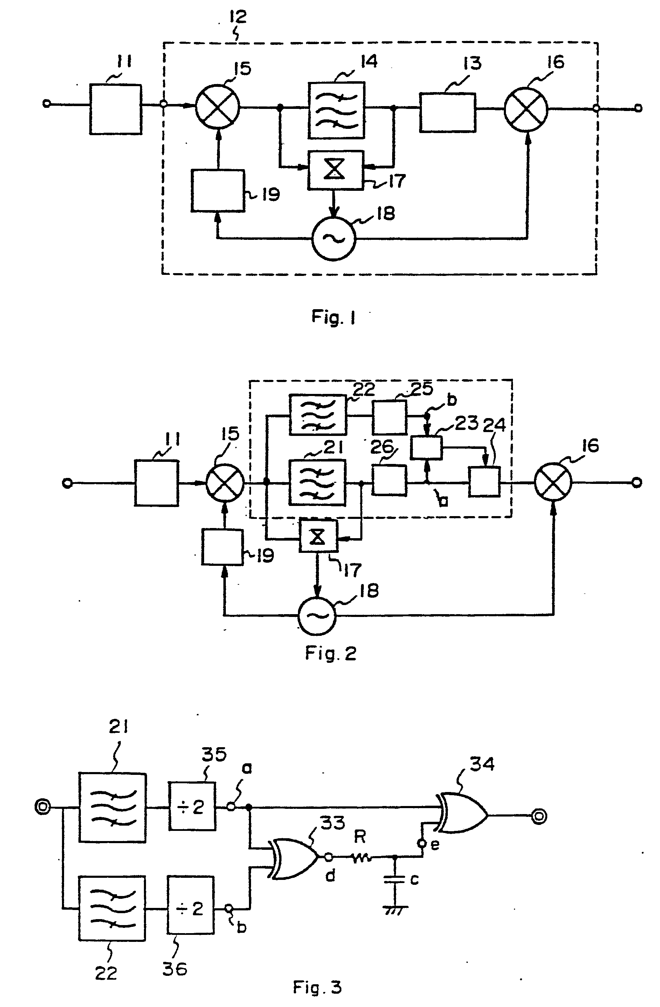

In a carrier regeneration system called the mutliplication system, remodulation system or reverse regeneration system among the carrier regeneration systems which regenerates the carrier from the PSK signal, a band-pass-filter with a narrow frequency band is used for noise suppression. It is already known that a phenomenon called phase skipping or slipping occurs unless a sufficiently narrow frequency bandwidth is used as the band-pass-filter required in these systems. In a 4-phase PSK system, for example, this phenomenon occurs as sudden phase changes of 180° or ± 90° in the phase of the regenerated carrier. If this occurs in a system wherein demodulation is performed by means of coherent detection, all data in the subsequent demodulation period will be erroneous. Therefore, the generation or occurrence rate of this phenomenon must be minimized. The simplest method of obtaining such minimized generation rate is to make the frequency bandwidth of the band-pass-filter used for noise suppression from the regenerated carrier sufficiently small, but this also has defects. Figure 1 shows a conventional circuit for regenerating the carrier from a N-phase PSK signal. In this Figure, 11 is a N x 1-multiplication circuit; the part surrounded by the dotted line 12 is a circuit called a tracking filter; 13 is a 1/N divider; 14 is a band-pass-filter; 15, 16 are frequency converters; 17 is a phase detector; 18 is a voltage controlled oscillator and 19 is a N x 1 multiplication circuit.

It is already well known that a sufficiently narrow frequency bandwidth for the filter 14 of the tracking filter 12 will bring about a low generation rate of the phase skipping which occurs when a signal frequency is divided by a divider 13.

If this circuit is used, for example, in the burst mode wherein a signal intermits, the transient response characteristic at the time of signal intermission must be taken into account since this circuit has the form of a feedback control system. In order to improve this transient response characteristic, it is necessary to widen the frequency bandwidth of the band-pass-filter 14. Because of these conflicting requirements for the bandwidth of filter 14, is has been very difficult to configure such a circuit that simultaneously satisfies both the phase skipping characteristic and transient response characteristic requirements.

One arrangement previously proposed by the applicant to resolve the above-mentioned conflicting requirements has been described in IEEE International Conference on Communications, June 16—18, 1975, New York, USA, Asahara et al. "A 4-phase PSK modem for an SCPC satellite communication system", pages 12—28 to 12—32 (vol. 1).

It is an object of the present invention to provide a circuit arrangement which makes acceptably small the rate of phase skipping of the regenerated carrier without, at the same time, seriously producing an adverse effect on the transient response characteristic.

This object is attained according to the invention with a circuit arrangement for a phase modulation system, of the kind in which for carrier regeneration incoming signals are frequency multiplied, having a band-pass-filter to which the multiplied signals are fed and a frequency divider for dividing signals output from the band-pass-filter, characterized by a second band-pass-filter, of different equivalent noise bandwidth from the first-mentioned band-pass-filter and to which second filter are also fed frequency multiplied input signals, a second frequency divider for dividing signals output from or derived from signals output from the second band-pass-filter, and a phase detector connected to the outputs of both dividers for producing an error correction signal in dependence upon the phase relationship of the two divider outputs and means for utilizing this error correction signal to correct phase skip errors in the regenerated carrier signal or phase skip induced errors in a demodulated signal demodulated using the regenerated carrier.

For a better understanding reference will now be made to the accompanying drawings, in which

Figure 1 shows in block diagrammatic form an existing carrier regeneration circuit,

Figure 2, similarly, shows one embodiment of the invention,

Figure 3 shows a practical example of part of the circuit of Fig.2,

Figure 4 shows signal waveforms occurring at different points of the circuit shown in Fig. 3,

Figure 5 shows in block diagram form a second embodiment of the invention,

Figure 6, similarly, shows a third embodiment of the invention,

Figure 7, similarly, shows a fourth embodiment of the invention,

Figure 8 shows interrelation of phases between the transmitted carrier and regenerated carrier of a 4-phase PSK signal, and

Figure 9 shows in graphical form the results of the present invention.

Figure 2 shows the 1st embodiment of the present invention. In this Figure, 21, 22 are band-pass-filters; 23 is a phase detector; 24 is a phase shifter; and the same circuits as those in Fig. 1 are given the same references.

In this Figure 2, the portion surrounded by the dotted line is the part changed from Fig. 1 to produce the embodiment in accordance with the present invention. In other words, a circuit consisting of the band-pass-filters 21, 22, phase detector 23, phase shifter 24 and 1/N dividers 25, 26 is used, in place of the band-pass-filter 14 of Fig. 1. In this new circuit, the frequency bandwidth of the band-pass-filter 22 is narrower than that of the band-pass-filter 21.

Therefore, the equivalent noise bandwidth of the output which appears at point (a) after passing the multiplier 11, frequency converter 15 and band-pass-filter 21 is broader than the equivalent noise bandwidth of the output which appears at point (b) after passing the band-pass-filter 22.

Therefore, an output at the point (a) is superior to that of the point (b) with respect to the transient response characteristic but is inferior with respect to the cycle skipping characteristic.

Here, it is assumed that the generation rate of cycle slip at the point $b$ is so small that it can be ignored in comparison with that at the point $a$. This can be effected by using a sufficiently narrow pass-band for the filter 22. Since a phase skip takes only discrete values (180° or $\pm 90°$ in the case of 4-phase modulation), a phase shift resulting from a phase skip can be detected by detecting a corresponding phase difference between the points $a$ and $b$ with a phase detector 23. Upon such a detection, the phase of the signal occurring at $a$ can be returned to that pertaining before a phase skip occurred by means of the phase shifter 24. Thus, the generation rate of phase skip in the output signal can be substantially lowered.

Figure 3 shows an embodiment derived from Fig. 2 on the supposition that a variation of 180° occurs as the phase skip, for example, in the case of a 2-phase PSK system. This circuit corresponds to the part within dotted lines of Fig. 2. In this circuit, the Exclusive -OR circuit 33 judges whether the phases at the points $a$ and $b$ are in-phase or out-of phase and then the Exclusive -OR circuit 34 provides inversion or non-inversion of polarity of the signal appearing at the point $a$ in accordance with the output of 33. At point $d$ in Fig. 3, if a phase difference between the points $a$ and $b$ does not become 0° or 180° precisely due to the difference of the characteristics of the band-pass-filters 21 and 22, a spike occurs in accordance with such phase differences. Such spikes are smoothed by a resistor R and capacitor C, and the smoothed input then fed to the Exclusive-OR circuit 34.

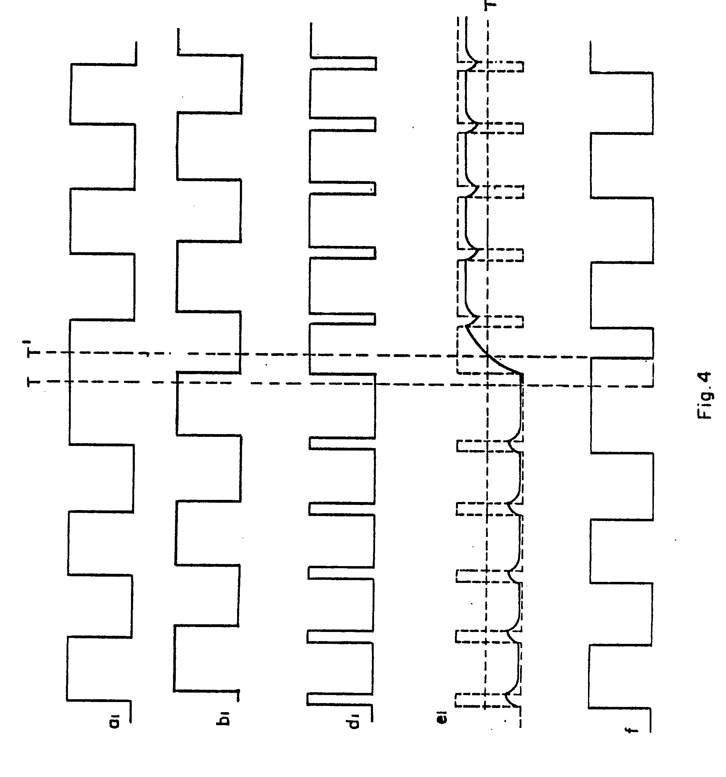

The circuit operation will be explained in more detail using waveforms shown in Fig. 4.

In Fig. 4, $a_1$ represents a signal at the point $a$;

$b_1$, a signal at the point $b$; $d_1$, a signal at the point $d$; $e_1$, a signal at the point $e$; and $f$, an output signal from circuit 34.

The signal having passed the band-pass-filters 21, 22 is divided by the dividers 35, 36 into the signals indicated as $a_1$ and $b_1$.

The signal $a_1$ at the point $a$ includes less phase deviation because of passing through the wider band-pass-filter 21 but causes frequent phase skipping.

On the other hand, the signal $b_1$ at the point $b$ includes much more phase deviation because of passing through the narrower band-pass-filter 22 but does not cause frequent phase skipping.

The explanatory figures relate to the case where the signal $a_1$ leads by about 30° the signal $b_1$ because of phase deviation resulting from the different characteristics of the band-pass-filters 21 and 22.

When the signals $a_1$ and $b_1$ are input to the Exclusive-OR circuit 33, a "1" output is generated for a phase difference between the inputs and this is shown by the signal $d_1$ of Fig. 4.

The signal $d_1$ is smoothed by a smoothing circuit consisting of resistor R and capacitor C and the smoothed signal $e_1$ appears at the point $e$.

The signal $a_1$ shows a phase skip of 180° occurring at time T (the signal polarity is inverted), and the signal $e_1$ changes at a time T', a little after the time T, from the lower level "O" to a higher level "1" exceeding the threshold level TH.

The output $f$ of the Exclusive-OR circuit 34 corresponds to the signal $a_1$ for the period up to the time T', but thereafter corresponds to the inverted signal $a_1$.

Thereby, a phase skip occurring in the signal at point $a$ is corrected at the output of the Exclusive-OR circuit 34.

In the embodiment of Fig. 3, the phase of the regenerated carrier is corrected by signal inversion using an Exclusive-OR circuit.

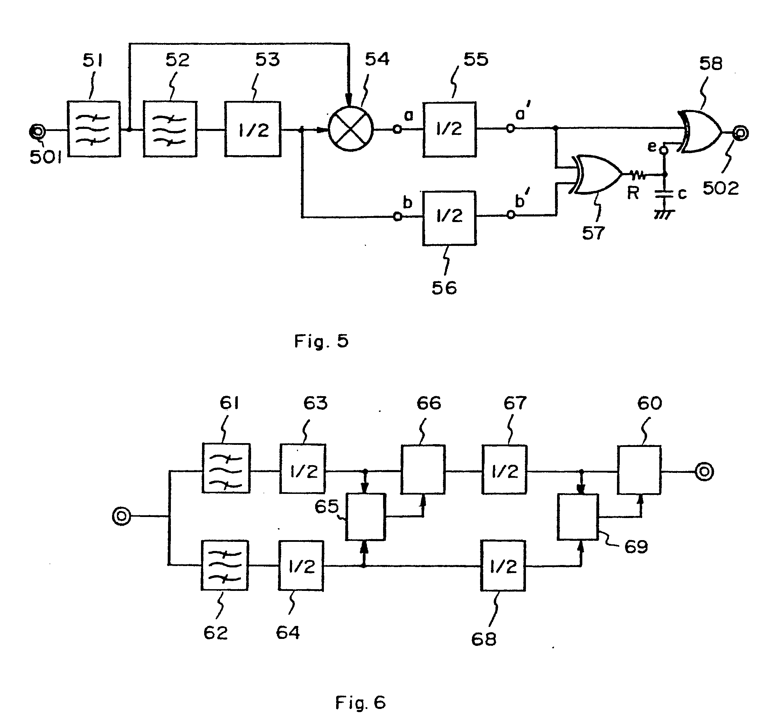

Another embodiment of the present invention is shown in Fig. 5.

This circuit shows a filter circuit part (corresponding to that within dotted lines in Fig. 2) of a carrier regeneration circuit for a 4-phase PSK system. In this circuit, 51, 52 are band-pass-filters of different equivalent noise bandwidths, that of 51 being broader than that of 52; 53, 55 and 56 are 1/2 divider circuits; 54 is a frequency converter; and 57 and 58 are Exclusive-OR circuits.

A signal obtained by multiplying by 4 times the received PSK signal or by frequency converting it is input to the band-pass-filter 51 via the input point 501. The output of the band-pass-filter 51 is divided into two parts; one is directly input to the frequency converter 54, while the other is input to the band-pass-filter 52.

The output of the band-pass-filter 52 is divided to 1/2 frequency by divider 53 and then input to the frequency converter 54. The frequency converter 54 extracts a frequency element which is a difference between both inputs. Thereby, an output is obtained from 54 in which phase deviation due to the band-pass-filter 51 is offset. The equivalent noise bandwidth of the output of the frequency converter 54 is almost equal to that of the signal having passed through only the band-pass-filter 51.

Therefore, at the point a, again the phase deviation is smaller than that at the point b which is located after two band-pass-filters, but a signal with small S/N (the equivalent noise bandwidth is broader) can be obtained.

When the signal at point a is divided into 1/2 by the divider 55, the probability of phase skip is larger than when the signal at point b is divided into 1/2 by the divider 56. Since a phase skip due to the 1/2 divider is 0° or 180°, polarity differences at the points a' and b' are identified by the Exclusive-OR circuit 57. Thus, if there is a polarity difference between the signals at the points a' and b', the signal at a' is effectively inverted by means of the Exclusive-OR circuit 58, and an output, which is equal to that at the point b' with respect to freedom from phase skip and which is also equal to that at the point a' with respect to phase error generated by the filters 51 and 52, can be obtained at the output terminal 502.

Figure 6 shows an embodiment of the present invention for a carrier regeneration circuit using the multiplication system. In this Figure, 61, 62 are band-pass-filters of different equivalent noise bandwidths, that of 61 being broader than that of 62; 63, 64, 67 and 68 are 1/2 dividers; 65, 69 are phase detectors and 66 and 60 are phase inventors (using Exclusive-OR circuits). In this embodiment, phase skips are improved by applying correction each time the frequency is divided by 1/2. The principle of operation and correction is the same as for the previously described embodiments.

In other words, in the case of 4-phase PSK signal, the carrier is obtained through two frequency divisions, each by 1/2. It is probable that a phase skip occurs at every frequency division for the signal passing through the wider bandwidth filter and for this reason correction is effected at each division stage.

Therefore, a phase skip at the output of divider circuit 63 is corrected by an error signal from phase detector 65 controlling phase invertor 66, and a phase skip generated at the divider circuit 67 is corrected by an error signal from phase detector 69 controlling phase invertor 60.

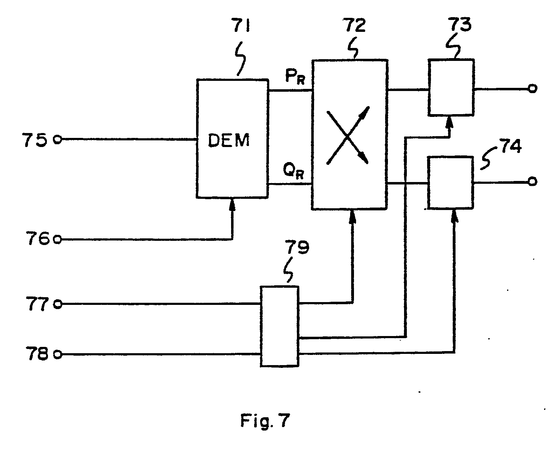

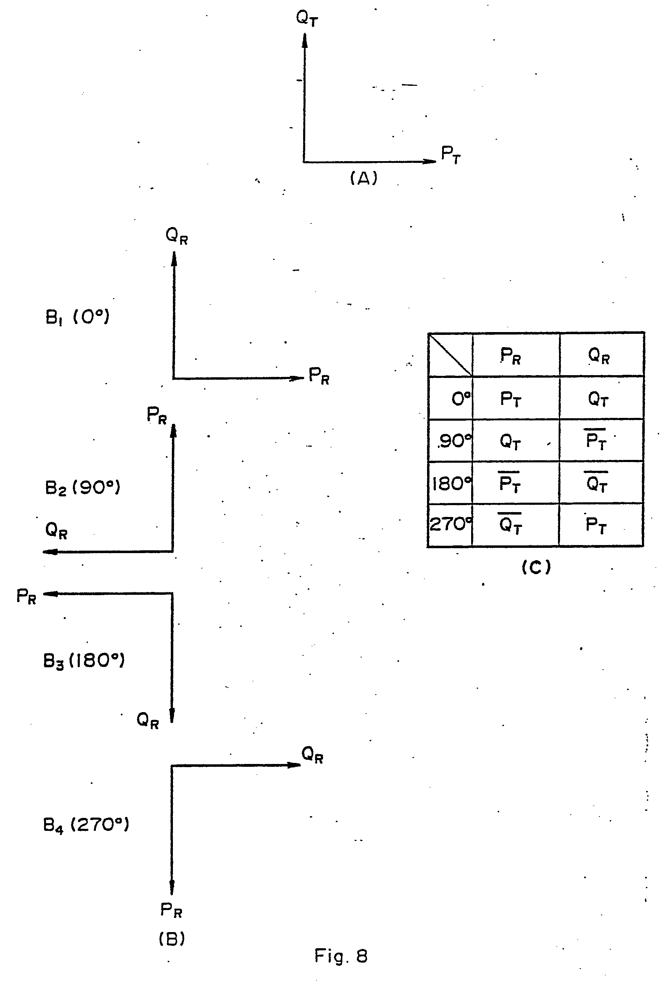

In embodiments described above, phase inversion is effected by means of Exclusive-OR circuits. However, if a phase does not change by 180° precisely and a phase error $\Delta\theta$ occurs due to imperfections of the Exclusive-OR circuit, the performance is deteriorated in accordance with the above-mentioned $\Delta\theta$. For instance, it is well known that deterioration of C/N due to $\Delta\theta$ in the 2-phase PSK modulation system is about 20 $\log_{10}$ $(\cos\Delta\theta)$. This disadvantage can be avoided by inverting the polarity or switching channels of the baseband signal after demodulation, in place of correction by directly inverting the phase of the regenerated carrier. An embodiment for such a purpose will now be explained with reference to Fig. 7 and Fig. 8.

Referring to Fig. 7, 71 is a PSK demodulator; 72 is a circuit for inverting the channel of the baseband signal; and 73 and 74 are polarity invertors. The received PSK signal is connected to the input terminal 75, the uncorrected regenerated carrier is connected to the terminal 76, the error signal output point 65 of a circuit similar to that of Fig. 6 is connected to the terminal 77, and the error signal output point 69 of such a circuit is connected to the terminal 78. The circuit does not incorporate circuits 66 and 60 since the correction is to be applied to the demodulated baseband signals.

If the polarity of the outputs of the detectors 65, 69, in Fig. 6 is positive for in-phase inputs and negative for out-of-phase inputs, the relationship between the polarity at the terminals 77, 78 of Fig. 7 and the phase error or the regenerated carrier fed to the terminal 76 is as shown in Table 1.

TABLE 1

| Terminal 77 | Terminal 78 | Phase of Carrier |
|:---:|:---:|:---:|
| + | + | 0° |
| + | − | 180° |
| − | + | 90° |
| − | − | 270° |

It can be determined on the basis of this Table in which way the baseband signal has been incorrectly demodulated as a result of the phase skip and it can thus be determined whether the two channels of the output of the demodulator 71 are interchanged or the polarity is inverted. Using the circuit 79, a correct baseband output can be obtained by means of the channel inversion or interchanging circuit 72 and the polarity inversion circuits 73, 74.

The above process will be explained in more detail using parts (A), (B) and (C) of Figure 8.

The 4-phase PSK signal is composed of the 2-phase PSK signals P and Q having a phase difference therebetween of 90°.

These two signals P and Q may be demodulated in four ways as shown in (B) in dependence upon the possible four phase skips of the carrier — 0°, 90°, 180° and 270°.

As shown, in the case of $B_1$, the phase skip is 0°; in the case of $B_2$, 90°; in the case of $B_3$, 180°; and in the case of $B_4$, 270°.

In Figure 8, $P_T$, $Q_T$ are the transmitted signals, while $P_R$, $Q_R$ are the demodulated baseband signals using the uncorrected regenerated carrier and the relation between the transmitted and demodulated baseband signals in dependence upon the phase of the regenerated carrier is as shown in Fig. 8(C).

This figure also clearly suggests the kind of correction which needs to be made for the baseband signal. (In the Table, a line above the listed baseband signal indicates that its polarity is inverted). When the carrier phase error is 0°, no correction is required. In the case of 90° error, the channels should be interchanged and the polarity of signals $P_T$ should be inverted. In the case of 180° error, the channels are to be left unchanged and the polarity of signals $P_T$ and $Q_T$ are to be inverted. In the case of 270° error, the channels are to be interchanged and the polarity of the signal $Q_T$ is to be inverted.

With the aforementioned corrections the transmitted baseband signal will have been correctly demodulated. An example of one way of effecting such corrections will be explained by further reference to Fig. 7.

Signals having the polarity shown in Table 1 are input to the circuit 79 for the various phase skip errors of the regenerated carrier. When the polarities of the input signals are +, +respectively, the demodulated baseband signal is allowed to pass unaltered.

If the polarities are + and −, to terminals 77 and 78 respectively, it indicates a phase skip of 180°, and the polarities of the two demodulated baseband signals are inverted by means of the polarity inversion circuits 73 and 74 under the control of circuit 79.

If the respective polarities are −, +, it indicates a phase skip of 90°, and after the channels are interchanged by the channel inversion circuit 72, the polarity of the P channel signals is inverted by means of the polarity inversion circuit 73.

If the respective polarities are −, −, it indicates a phase skip of 270°, and after the channels are interchanged by the channel inversion circuit 72, the polarity of the Q channel signal is inverted by means of the polarity inversion circuit 74.

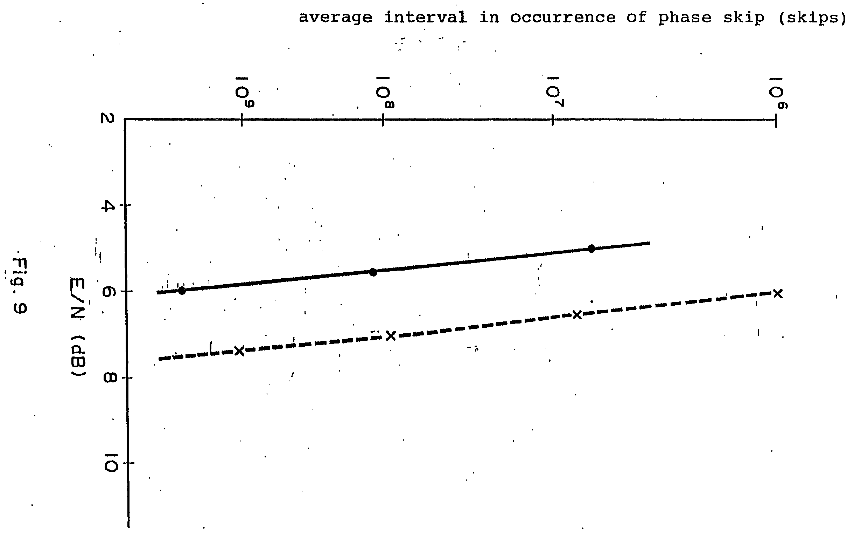

Figure 9 shows graphically an example of improvement in the phase skip generation in a case where an embodiment as shown in Fig. 5 is used in the regeneration of the carrier of a 4-phase PSK modulated signal. The lateral axis represents E/N and the vertical axis represents the average interval in occurrence of phase skip. Here E is signal power per bit and N is noise power density. In this figure the solid line is the characteristic obtained using the present invention and the broken line is the characteristic obtained without the present invention, i.e. the characteristic obtained when the divider 55 and Exclusive-OR circuits 57, 58 in Fig. 5 are not used. As can be seen from this figure, in the case E/N=6 dB, for example, the average interval of phase skip is improved to $3.3 \times 10^9$ symbols from $1 \times 10^6$ symbols.

In other words, the generation rate of phase skip with this example of the invention is reduced to about 1/3300 of the rate for the similar circuit not incorporating the invention.

The present invention has been explained taking an example of the multiplication system, but it can also be adopted into the regeneration circuit of the re-modulation system when a narrow band filter is used for suppressing noise level.

**Claims**

1. A circuit arrangement, for a phase modulation system of the kind in which for carrier regeneration, incoming signals are frequency multiplied, having a bandpass-filter (21; 51; 61) to which the multiplied signals are fed and a frequency divider (26; 55; 63) for dividing signals output from the band-pass-filter, characterized by a second band-pass-filter (22; 52; 62), of different equivalent noise bandwidth from the first-mentioned band-pass-filter and to which second filter are also fed frequency multiplied input signals, a second frequency divider (25; 56; 64) for dividing signals output from or derived from signals output from the second band-pass-filter, and a phase detector (23; 57; 65) connected to the outputs of both dividers for producing an error correction signal in dependence upon the phase relationship of the two divider outputs and means (24; 58; 66; 79; 72 73 and 74) for utilizing this error correction signal to correct phase skip errors in the regenerated carrier signal or phase skip induced errors in a demodulated signal demodulated using the regenerated carrier.

2. A circuit arrangement according to claim 1, characterized in that said means for utilizing the error correction signal is a phase shifter (24; 58; 66) connected to receive the divided output having the widest equivalent noise bandwidth and designed to alter the phase of this output on receipt of an error correction signal from said phase detector.

3. A circuit arrangement according to claim 1 or 2, characterized in that the two band-pass-filters are connected in parallel.

4. A circuit arrangement according to claim 2, characterized in that the two band-pass-filters (51; 52) are connected in series, with the first filter (51) in the series connection having the widest equivalent noise bandwidth, and in that a third divider (53) is connected to receive the output of the second filter (52), and a frequency converter or mixer (54) is connected to receive as one input the signal from the junction between the two band-pass-filters and as a second input the output from the third divider, the outputs from said frequency converter and from the third divider being fed each to a respective one of said first-mentioned and second dividers (56; 55).

5. A circuit arrangement according to claim 2 or 4, characterized in that said phase detector and said phase shifter are each formed by a respective Exclusive-OR (circuit 33; 34; 57; 58).

6. A circuit arrangement according to claim 1, characterized by a demodulating arrangement (71) for demodulating phase modulated signals using the regenerated carrier, and characterized in that said means (79; 72; 73; 74) for utilizing the error signal is designed to effect channel switching or polarity inversion of the baseband signal after demodulation.

7. A circuit arrangement according to claim 6, for a 4-phase PSK system, characterized in that said first-mentioned (63) and second dividers (64) provide half the desired frequency division; and in that there are third (67) and fourth dividers (68) each connected to receive the output of a respective one of the first and second dividers and to provide the other half of the desired frequency division, a second phase detector (69) connected to the output of the third and fourth dividers to produce a second error correction signal, and a logic circuit (79) to which both error signals are fed and which determines therefrom if said channel switching and/or baseband signal inversion are or is required.

**Revendications**

1. Circuit pour un système de modulation de phase du type dans lequel, pour la reproduction de la porteuse, des signaux d'entrée sont multipliés en fréquence, ayant un filtre passe-bande (21; 51; 61) auquel les signaux multipliés sont délivrés et un diviseur de fréquence (26; 55; 63) qui divise les signaux sortant du filtre passe-bande, caractérisé par un deuxième filtre passe-bande (22; 52; 62) de largeur de bande de bruit équivalente différente de celle du filtre passe-bande mentionné en premier et auquel deuxième filtre sont également envoyés des signaux d'entrée multipliés en fréquence, un deuxième diviseur de fréquence (25; 56; 64) qui divise les signaux sortant du deuxième filtre passe-bande ou déduits de signaux sortant de celui-ci, et un comparateur de phase (23; 57; 65) connecté aux sorties des deux diviseurs afin de produire un signal de correction d'erreur en fonction du déphasage existant entre les sorties des deux diviseurs ainsi qu'un moyen (24; 58; 66; 79; 72; 73 et 74) destiné à utiliser ce signal de correction d'erreur pour corriger les erreurs de saut de phase dans le signal de la porteuse reproduite ou les erreurs induites par des sauts de phase dans un signal démodulé qui a été démodulé au moyen de la porteuse reproduite.

2. Circuit selon la revendication 1, caractérisé en ce que ledit moyen servant à utiliser le signal de correction d'erreur est un dép haseur (24; 58; 68) connecté façon à recevoir le signal de sortie divisé ayant la plus grande largeur de bande de bruit équivalente et conçu pour modifier la phase de ce signal de sortie à la réception d'un signal de correction d'erreur en provenance dudit comparateur de phase.

3. Circuit selon la revendication 1 ou 2, caractérisé en ce que les deux filtres passe-bande sont connectés en parallèle.

4. Circuit selon la revendication 2, caractérisé en ce que les deux filtres passe-bande (51; 52) sont connectés en série, le premier filtre (51) de la connexion en série ayant la plus grande largeur de bande de bruite équivalente, et en ce qu'un troisième diviseur (53) est connecté de façon à recevoir le signal de sortie du deuxième filtre (52), et un convertisseur ou mélangeur de fréquence (54) est connecté de façon à recevoir comme premier signal d'entrée le signal venant du point de jonction entre les deux filtres passe-bande et, comme deuxième signal d'entrée, le signal de sortie venant du troisième diviseur, les signaux de sortie dudit comparateur de fréquence et du troisième diviseur étant délivrés chacun à l'un respectif desdits diviseurs mentionnés en premier et en deuxième (56; 55).

5. Circuit selon la revendication 2 ou 4, caractérisé en ce que ledit comparateur de phase et ledit déphaseur sont chacun formés par un circuit OU exclusif respectif (33; 34; 57; 58).

6. Circuit selon la revendication 1, caractérisé par un moyen de démodulation (71) destiné à démoduler des signaux modulés en phase au moyen de la porteuse reproduite, et caractérisé en ce que ledit moyen (79; 72; 73; 74) servant à utiliser le signal d'erreur est conçu pour effectuer une commutation de canaux ou une inversion de polarité sur le signal de bande de base après démodulation.

7. Circuit selon la revendication 6, pour un système PSK à quatre phases, caractérisé en ce que ledit diviseur mentionné en premier (63) et ledit diviseur mentionné en deuxième (64) produisent la moitié de la division de fréquence voulue; et en ce qu'il existe un troisième diviseur (67) et un quatrième divisieur (68) connectés chacun de façon à recevoir le signal de sortie de l'un respectif desdits premier et deuxième diviseurs et à produire l'autre moietié de la division de fréquence voulue, un deuxième comparateur de phase (69) connecté à la sortie des troisième et quatrième diviseurs afin de produire un deuxième signal de correction d'erreur, et un circuit logique (79) auquel les deux signaux d'erreur sont délivrés et qui détermine à partir de ceux-ci si ladite commutation de canaux et, ou bien, l'inversion du signal de bande de base sont ou non nécessaires.

## Ansprüche

1. Phasenkorrekturschaltung für ein Phasenmodulationssystem der Art, bei welchem zur Trägerregeneration ankommende Signale frequenzmultipliziert werden, mit einem Bandpaßfilter (21; 51; 61), welchem die multiplizierten Signale zugeführt werden, und einem Frequenzteiler (26; 55; 63) zur Teilung der Ausgangssignale des Bandpaßfilters, gekennzeichnet durch ein zweites Bandpaßfilter (22; 52; 62), das eine vom ersten Bandpaßfilter unterschiedliche Rauschersatzbandbreite hat und dem ebenfalls die frequenzmultiplizierten Eingangssignale zugeführt werden, durch einen zweiten Frequenzteiler (25; 56; 64) zur Teilung der Ausgangssignale des zweiten Bandpaßfilters oder davon abgeleiteter Ausgangssignale, und durch einen Phasendetektor (23; 57; 65), welcher mit den Ausgängen beider Teiler verbunden ist um ein Fehlerkorrektursignal in Abhängigkeit von der Phasenrelation der beiden Teilerausgangssignale zu erzeugen, und durch eine Einrichtung (24; 58; 66; 79; 72; 73 und 74) zur Verwendung dieses Fehlerkorrektursignals zur Korrektur von Phasenänderungsfehlern in dem regenerierten Trägersignal oder von durch Phasenänderung induzierten Fehlern in einem demodulierten Signal, welches unter Verwendung des regenerierten Trägers demoduliert worden ist.

2. Schaltungsanordnung nach Anspruch 1, dadurch gekennzeichnet, daß die genannte Einrichtung zur Verwendung des Fehlerkorrektursignals einen Phasenschieber (24; 58; 68) umfaßt, welcher so angeschlossen ist, daß er das dividierte Ausgangssignal empfängt, welches die breiteste Rauschersatzbandbreite aufweist und der so ausgelegt ist, daß er die Phase dieses Ausgangssignals bei Empfang eines Fehlerkorrektursignals von dem genannten Phasendetektor ändert.

3. Schaltungsanordnung nach Anspruch 1 oder 2, dadurch gekennzeichnet, daß die beiden Bandpaßfilter parallel zueinander geschaltet sind.

4. Schaltungsanordnung nach Anspruch 2, dadurch gekennzeichnet, daß die beiden Bandpaßfilter (51; 52) in Reihe geschaltet sind, wobei das erste Filter (51) der Reihenschaltung die breiteste Rauschersatzbandbreite aufweist, und daß ein dritter Teiler (53) so angeschlossen ist, daß er das Ausgangssignal des zweiten Filters (52) empfängt, und daß ein Frequenzkonverter oder -mischer (54) so angeschlossen ist, daß er als Eingangssignal das Signal des Koppelpunktes zwischen den beiden Bandpaßfiltern und also zweites Eingangssignal das Ausgangssignal des dritten Teilers empfängt, und daß die Ausgangssignale des Frequenzkonverters und des dritten Teilers dem entsprechenden erstgenannten oder zweitgenannten Teiler (56; 55) zugeführt werden.

5. Schaltungsanordnung nach Anspruch 2 oder 4, dadurch gekennzeichnet, daß der Phasendetektor und der genannte Phasenschieber jeweils durch ein entsprechendes ausschließliches ODER-Glied (33; 34; 57; 58) gebildet sind.

6. Schaltungsanordnung nach Anspruch 1, gekennzeichnet durch eine demodulierende Anordnung (71) zur Demodulierung der phasenmodulierten Signale unter Verwendung des regenerierten Trägers und dadurch gekennzeichnet, daß die genannte Einrichtung (79, 72; 73; 74) zur Verwendung des Fehlersignals so ausgelegt ist, daß eine Kanalumschaltung oder eine Polaritätsumkehr des Basisbandsignals nach dem Demodulieren durchgeführt wird.

7. Schaltungsanordnung nach Anspruch 6 für ein 4-Phasen-PSK-System, dadurch gekennzeichnet, daß der erste Teiler (63) und der zweite Teiler (64) die halbe gewünschte Frequenzteilung durchführen, und daß es einen dritten Teiler (67) und einen vierten Teiler (68) gibt, welche jeweils so angeschlossen sind, daß sie das Ausgangssignal des entsprechenden ersten Teilers bzw. zweiten Teilers empfangen und die andere Hälfte der gewünschten Frequenzteilung erzeugen, daß ein zweiter Phasendetektor (69) mit dem Ausgang des dritten Teilers und des vierten Teilers verbunden ist, um ein zweites Fehlerkorrektursignal zu erzeugen, und daß eine Logikschaltung (79) vorgesehen ist, welcher beide Fehlersignale zugeführt werden und welche aufgrund dieser Signale entscheidet, ob die genannte Kanalumschaltung und/oder Basisbandsignalinversion erforderlich sind oder ist.

Fig. 1

Fig. 2

Fig. 3

Fig. 4

Fig. 5

Fig. 6

0 020 783

Fig. 7

$Q_T$

$P_T$

(A)

$Q_R$

$B_1$ (0°)

$P_R$

$P_R$

$B_2$ (90°)

$Q_R$

$P_R$

$B_3$ (180°)

$Q_R$

$Q_R$

$B_4$ (270°)

$P_R$

(B)

| | $P_R$ | $Q_R$ |
|---|---|---|
| 0° | $P_T$ | $Q_T$ |
| 90° | $Q_T$ | $\overline{P_T}$ |
| 180° | $\overline{P_T}$ | $\overline{Q_T}$ |
| 270° | $\overline{Q_T}$ | $P_T$ |

(C)

Fig. 8

Fig. 9